# EUROPEAN PATENT APPLICATION

(11) **EP 4 663 779 A1**
(43) Date of publication of application: **17.12.2025**
(21) Application number: 23938167.6
(22) Date of filing: 18.09.2023
(51) Int. Cl.: C21C 7/00, C21C 7/10, C21C 7/076, C22C 33/04, C22C 38/02, C22C 38/04, C22C 38/06, C22C 38/00, C22C 38/14

(54) **METHOD FOR PRODUCING STEEL STRIP FOR BATTERY CASE**

(30) Priority: 22.05.2023 CN 202310577271
(71) Applicant: Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN); Zhangjiagang Yangtze River Cold Rolled Plate Co. Ltd, Suzhou, Jiangsu 215625 (CN)
(72) Inventor: ZHOU, Yanzhao, Suzhou, Jiangsu 215600 (CN); MA, Jianchao, Suzhou, Jiangsu 215600 (CN); ZHAO, Jiaqi, Suzhou, Jiangsu 215600 (CN); LI, Ning, Suzhou, Jiangsu 215600 (CN)
(74) Representative: Cleanthous, Marinos
(86) International application number: PCT/CN2023/119274
(87) International publication number: WO 2024/239498

(57) **Abstract**

A method for producing a steel strip for a battery case is provided. The steel strip for a battery case includes the following chemical composition in percentage by mass: carbon: 0.003-0.006%, silicon: ≤0.03%, manganese: 0.35-0.45%, titanium: 0.040-0.050%, aluminum: 0.040-0.060%, phosphorus: ≤0.020%, sulfur: ≤0.012%, nitrogen: ≤0.0040%, and the balance of iron and other inevitable impurities, wherein 7>Ti/(C+N)>5. The process flow of the production is as follows: hot metal pretreatment→ converter smelting → LF refining → RH treatment → continuous pouring → hot rolling → acid pickling → cold rolling → continuous annealing → finishing. By means of designing the chemical composition, the Δr value of strip steel is reduced, and the isotropy and processability of the strip steel are improved; and by means of the process, precise control over steel composition and effective control over the amount and size of inclusions in the steel are achieved, the amount of inclusions in a shallow surface layer of a slab is reduced, the peeling depth is reduced or peeling is avoided, and the yield is increased.

## Description

### TECHNICAL FIELD

The present disclosure relates to a method for producing a steel strip for a battery case, belonging to the field of metallurgical technology.

### BACKGROUND

Steel for battery case is a high-end cold-rolled steel grade with high comprehensive performance requirements, and the steel strip is required to have high cleanliness, high surface quality, high performance uniformity and excellent processability. Therefore, in the manufacturing process, it is required to reduce the anisotropy of a strip steel (Δr is less than or equal to 0.15) to ensure its stamping performance, reduce the number of endogenous inclusions such as deoxidation products and foreign inclusions such as secondary oxidation, and reduce defects such as sand holes, skin warping, holes and stamping cracks, thereby ensuring the surface quality.

Common defects of the steel for battery case include slag inclusion, skin warping, sand holes, holes, cracks, and the like. These defects are mainly caused by nonmetallic inclusions produced in steelmaking process. In the process of stamping components with the steel for battery case, it is required that a wall thickness is thinned evenly and there are no defects such as earing phenomenon and burrs. Therefore, the manufacturing process of the steel for battery case requires extremely low anisotropy, and the smaller the size of non-metallic inclusions, the better.

In the prior art, the steel for battery case mainly has the following problems: (1) the strip steel has poor anisotropy, and the wall thickness is unevenly thinned in the process of stamping components, and defects such as earing phenomenon and burrs are easy to occur; (2) A large number of large-sized inclusions in the strip steel is about to affect continuous casting performance of molten steel, resulting in defects such as skin warping, sand holes and holes on the surface of the strip steel.

For example, in patent document No. CN109136444A, a steel for a new energy automobile new energy automobile battery case suitable for quick and thinning stamping machining and a method for producing same are provided. Through a reasonable composition design and an optimized design of steelmaking, refining, continuous casting, hot rolling, coiling, cold rolling, continuous annealing and other processes, the cleanliness and performance of the steel strip are guaranteed, which not only has higher strength than commercial ultra-low-carbon steel, but also overcomes the problem of poor formability of a low-carbon battery case steel, thereby adapting to the machining requirements of rapid stamping and thinning stamping. However, this method requires high converter tapping temperature, which leads to large loss of refractories and high smelting cost during the converter smelting. During RH decarbonization, a large number of inclusions are generated due to oxygen blowing heating, which affects the casting performance of molten steel, and makes the final strip steel exhibit defects such as sand holes and skin warping. In patent document No. CN100560770C, a steel for a battery case with excellent plane isotropy and a method for manufacturing the same are provided. In this patent, a low-carbon aluminum-killed steel composition system is used to produce a steel for the battery case, with a carbon content of 0.01-0.05% in percentage by mass, and an annealing process is hood annealing. This composition system is low in production difficulty and low in manufacturing cost. However, due to its low-carbon steel composition, the stamping processability is poor, and it is difficult to meet the requirements of quick stamping and thinning of the steel for battery case.

### SUMMARY

An objective of the present disclosure is to provide a method for producing a steel strip for a battery case. An obtained steel strip has high cleanliness, high surface quality, high performance uniformity, and excellent processability.

To achieve the objective, the present disclosure employs the technical solution as follows:

A method for producing a steel strip for a battery case is provided. The steel strip for a battery case includes the following chemical composition in percentage by mass: 0.003-0.006% of carbon, less than or equal to 0.03% of silicon, 0.35-0.45% of manganese, 0.040-0.050% of titanium, 0.040-0.060% of aluminum, less than or equal to 0.020% of phosphorous, less than or equal to 0.012% of sulfur, less than or equal to 0.0040% of nitrogen, and a balance of iron and other inevitable impurities, where Ti/(C+N) is more than 5 and less than 7.

The principle of composition control of the steel strip for a battery case provided by the present disclosure is as follows:

Carbon (C) is a strengthening element in a steel, which makes the strength of the steel increase and the plasticity decrease. To ensure that the steel for a battery case of a new energy vehicle has a certain strength to resist an internal pressure of the battery after liquid filling, a C content needs to be controlled. In addition, carbon atoms in the form of interstitial atoms will reduce stamping formability of the steel strip. Therefore, the C content should be controlled at 0.0030-0.0060% in the present disclosure, thereby improving stamping formability while ensuring the strength of the steel strip.

Manganese (Mn) is a steel strengthening element. A certain manganese content can improve the strength of the steel strip, and MnS generated by the combination of Mn and S can avoid hot embrittlement of the steel caused by sulfur in the steel. However, too high Mn content in an ultra-low-carbon steel is unfavorable to stamping, so a Mn content should be controlled at 0.35-0.45%.

Titanium (Ti) is used to fix C and N atoms, enabling the steel strip to achieve an interstitial-free (IF) state and have excellent stamping formability. Ti mainly exists in the form of precipitated phases such as TiN, and precipitates in ferrite to hinder grain growth and improve strength. In the present disclosure, the C content is specially designed, and the Ti content needs to ensure the effect of fixing C and N, thereby improving the stamping formability and meeting isotropic requirements. In addition, too high Ti content has an adverse effect on the casting performance of the molten steel. Therefore, the Ti content should be correspondingly designed and controlled at 0.04-0.05%. In addition, by controlling Ti/(C+N) to be more than 5 and less than 7, when C and N are fixed, there is a proper amount of dissolved Ti content in the steel to improve r value to a certain extent and reduce anisotropy of the steel strip, thereby ensuring high-speed stamping formability.

Aluminum (Al) is used for deoxidation in the steelmaking process, the oxygen in the molten steel is removed, and alumina and other inclusions that are easily removed are generated. If an aluminum content in the molten steel is too low, the deoxidation effect is poor, and it is difficult to ensure the cleanliness of the molten steel. In addition, acid-soluble aluminum Als will be formed after aluminum is added to the steel, which can react with N to form AlN to promote interstitial atomization, and fine dispersed AlN precipitated phases can prevent austenite grains from growing, refine grains and promote microstructure homogenization. However, when an Als content is too high, the control difficulty in smelting and casting will be greatly improved. Therefore, the Als content should be controlled at 0.04-0.06%.

Silicon (Si) is a strengthening element. As Si has a large impact on the stamping performance, a Si content should be controlled to be less than or equal to 0.03%.

Phosphorus (P) has a strengthening effect. As the phosphorous will improve processing brittleness of a steel plate and endanger the stamping performance, the phosphorous needs to be removed. However, too low P content will lead to the increase of difficulty of steelmaking smelting, so the P content needs to be controlled to be less than or equal to 0.020%.

Sulfur (S) is a harmful element for the steel strip, which has influence on toughness, stamping performance and the like, and needs to the removed. Considering the control difficulty, a sulfur content needs to be controlled to be less than or equal to 0.012%.

Nitrogen (N): too high N content is about to lead to a great decrease of the stamping performance of the steel strip, and an N content needs to be controlled to be less than or equal to 0.0040%.

The technical process (production method) includes hot metal pretreatment, converter smelting, LF refining, RF treatment, continuous casting, hot rolling, acid pickling, cold rolling, continuous annealing, and finishing. The hot metal pretreatment is as follows: stirring the hot metal for desulfurization, where a sulfur content in the hot metal after desulfurization is less than or equal to 0.0050%, and a hot metal temperature is 1300-1330°C.

Converter smelting is as follows: there are at least two clearly visible bottom blowing holes, an argon gas is blown at the bottom in the whole blowing process, the argon gas flow rate is more than or equal to 300 Nm³/h, an endpoint temperature of converter blowing is 1640-1660°C, an endpoint carbon content of the converter is 0.03-0.04%, an endpoint free oxygen content of the converter is 0.06-0.08%, a T.Fe content in a converter final slag is 15-18%, and a slag amount during converter tapping is 2-4 kg/t.

LF refining is as follows: a ladle, after being placed, is moved to a power-on heating position, and power-on heating is started; and a bottom blowing flow rate of the ladle is controlled at 300-500 NL/min during heating process. The flow rate not only can ensure the temperature uniformity of the molten steel, but also can improve the power-on heating efficiency as much as possible. When the molten steel temperature reaches a target temperature of 1618-1635°C, a temperature and an oxygen content are measured, where a free oxygen content in the molten steel is 0.06-0.07%. the free oxygen content of 0.06-0.07% in the molten steel can meet the requirement of natural decarbonization in the RH decarbonization process. In addition, the decrease of the free oxygen content before deoxidation alloying can reduce the number of primary deoxidation products in the molten steel and improve the cleanliness of the molten steel. The bottom blowing flow rate of the ladle is adjusted to 100-200 NL/min. An objective of the bottom blowing flow rate of the ladle is to provide certain dynamic conditions to promote the melting of the modifier and lime and avoid secondary oxidation caused by the exposed molten steel on the surface. According to the free oxygen content in the molten steel, 400-500 kg of slag modifier and 400-500 kg of lime are added. The slag modifier has composition as follows: 45-50% of Al, 20-25% of CaO, 10-15% of Al₂O₃, 10-15% of CaCO₃, and other inevitable impurities, where CaCO₃ is a dispersing agent to promote the dispersion of the modifier.

RH treatment is as follows: an RH arrival temperature is 1610-1630°C. There is a certain temperature drop during RH treatment to meet temperature requirements of continuous casting. In addition, the decarbonization rate is faster at this temperature. The arrival free oxygen content of 0.06-0.07% can meet the requirements of natural decarbonization during RH decarbonization. In addition, the decrease of the free oxygen content before deoxidation alloying can reduce the number of primary deoxidation products in the molten steel and improve the cleanliness of the molten steel. An arrival carbon content is 0.025-0.035% (as the decarbonization capacity of the converter smelting is limited, the RH arrival carbon content can only be this level; and after RH decarburization in this control interval is finished, the free oxygen content in the molten steel is low, the primary deoxidation products are few, and the cleanliness of the molten steel is high), and a T.Fe content in ladle slag composition upon RH arrival is 5-8%. After carrying out RH decarbonization for 15-18 min, after the temperature, the arrival carbon content and the arrival oxygen content meet the conditions, 15-18 min of decarbonization can achieve the requirements. Too long time will bring unnecessary temperature drop, which may lead to oxygen blowing, aluminum adding and heating of RH, affecting the cleanliness of the molten steel. After RH decarbonization, the free oxygen content in the molten steel is 0.025-0.030%. Aluminum particles, carbon-containing ferromanganese, metallic manganese and a titanium-containing alloy are added in turn according to composition requirements, where an addition amount of carbon-containing ferromanganese is 2.3-2.7 kg/t steel, an addition amount of metallic manganese is 1.1-1.3 kg/t steel, and after the Al particles and manganese-containing alloy are added, circulation is carried out (such as 3 min) before the titanium-containing alloy is added. After alloying, circulation is carried out for 5-8 min before RH initiates breaking vacuum for tapping. A carbon content in the carbon-containing ferromanganese is 0.8-1.2%, and a titanium content in the titanium-containing alloy is more than or equal to 99.6%. The T. Fe content in the ladle slag composition after RH vacuum breaking is less than or equal to 5%. A time between RH vacuum breaking and cast start in continuous casting ranges from 10-15 min. During this period, there is a secondary oxidation process of the slag to the molten steel, so the time interval should be reduced as much as possible. However, due to the limitation of production rhythm, the time cannot be compressed infinitely, so this time range is selected.

Continuous casting is as follows: tundish superheat is 25-35°C, casting at high superheat can reduce inclusions in the molten steel and improve cleanliness. A cross section of a mold is 220 mm (thickness) *1000-1400 mm (width), and an immersion depth of a submerged nozzle is 160-200 mm. If the immersion depth is excessively deep, a mold surface temperature becomes too low; if the immersion depth is excessively shallow, the liquid level fluctuation of the mold large. An opening angle is 20° and the opening angle is matched with the immersion depth. This angle and corresponding immersion depth can reduce a number density of inclusions under a slab scale under the condition of ensuring that the mold surface temperature meets the requirements, and then a peeling depth of the slab can be reduced, or peeling is avoided. An argon flow rate of a stopper for continuous casting (that is, continuous casting) is 8-12 L/min, which can reduce the adhesion of inclusions on an inner wall of the nozzle, and avoid bubble defects in the slab. A final product has inclusions less than or equal to 15 µm in size, and has a total oxygen content of less than or equal to 15 ppm.

Others: a qualified continuous casting (that is, continuous casting) billet is subjected to hot rolling, acid pickling, cold rolling, sequential annealing, finishing and the like to obtain a strip steel for the battery case. Hot rolling, acid pickling, cold rolling, continuous annealing and finishing are prior art and thus will not be described in detail again.

According the present disclosure, by designing chemical composition of a steel for a battery case, a Δr value of the strip steel is reduced to improve the isotropy of a strip steel and the processability. Through the processes of converter, LF refining, RH treatment and continuous casting, the precise control of steel composition and the effective control of the number and sizes of inclusions in the steel are achieved. The extremely low-carbon elements and manganese elements in the molten steel are accurately hit by the cooperative use of the carbon-containing ferromanganese and metallic manganese, a low-quantitative control of the free oxygen in the molten steel after RH decarbonization is achieved through the LF heating, slag formation and fine position adjustment of the molten steel. By means of the optimization of the immersion depth of the submerged nozzle and process design of the argon blowing flow rate of the stopper, the number of inclusions in a shallow surface layer of a slab is reduced, the peeling depth is reduced or peeling is avoided, and the yield is increased.

### DETAILED DESCRIPTION OF THE EMBODIMENTS

Chemical composition of a steel strip for a battery case is as shown in Table 1, and the balance is iron and inevitable impurities.

**Table 1 Chemical Composition of Steel for Battery case**

| Furnac e number | Carb on conte nt % | Silicon content % | Mang anese conten t% | Titanium content % | Phosph orous content % | Aluminu m content % | Sulfur content % | Nitrogen content % | Ti/(C +N) |
|---|---|---|---|---|---|---|---|---|---|
| Target | 0.003-0 .006 | ≤0.03 | 0.35-0.4 5 | 0.04-0.05 | ≤0.02 | 0.04-0.06 | ≤0.012 | ≤0.004 | 5-7 |
| S1 | 0.0041 | 0.018 | 0.39 | 0.043 | 0.015 | 0.045 | 0.0054 | 0.0025 | 6.5 |
| S2 | 0.0048 | 0.019 | 0.42 | 0.045 | 0.017 | 0.052 | 0.0034 | 0.0028 | 5.9 |
| S3 | 0.0046 | 0.019 | 0.41 | 0.046 | 0.013 | 0.043 | 0.0057 | 0.0026 | 6.4 |
| S4 | 0.0045 | 0.017 | 0.40 | 0.045 | 0.016 | 0.046 | 0.0045 | 0.0032 | 5.8 |
| S5 | 0.0054 | 0.018 | 0.43 | 0.043 | 0.011 | 0.050 | 0.0046 | 0.0029 | 5.2 |
| S6 | 0.0051 | 0.023 | 0.37 | 0.047 | 0.012 | 0.049 | 0.0043 | 0.0024 | 6.3 |
| S7 | 0.00 55 | 0.021 | 0.39 | 0.045 | 0.015 | 0.048 | 0.0046 | 0.0023 | 5.8 |
| S8 | 0.00 49 | 0.019 | 0.42 | 0.044 | 0.016 | 0.053 | 0.0047 | 0.0028 | 5.7 |
| S9 | 0.00 48 | 0.016 | 0.39 | 0.046 | 0.012 | 0.054 | 0.0055 | 0.0029 | 6.0 |
| S10 | 0.00 50 | 0.022 | 0.42 | 0.048 | 0.013 | 0.056 | 0.0051 | 0.0025 | 6.4 |

A method for producing a steel strip for a battery case includes the following technological processes: hot metal pretreatment, converter smelting, LF refining, RH treatment, continuous casting, hot rolling, acid pickling, cold rolling, continuous annealing and finishing.

The hot metal pretreatment is as follows: desulfurization is performed at a pretreatment station by adding desulfurizer to hot metal from a blast furnace with stirring, where a sulfur content in the hot metal after desulfurization is less than or equal to 0.0050%, and a hot metal temperature is more than or equal to 1300°C.

Converter smelting is as follows: the desulfurized hot metal and scrap steel are added into a converter for smelting. There are four clearly visible bottom blowing holes at the bottom of the converter, an argon gas is blown at the bottom in the whole blowing process, where an argon gas flow rate is more than or equal to 300-350 Nm³/h, an endpoint temperature of the converter blowing is 1640-1660°C, an endpoint carbon content of the converter is 0.03-0.04%, an endpoint free oxygen content of the converter is 0.06-0.08%, a T. Fe content in a converter final slag is 15-18%. The converter blocks the slag by using a slag blocking plug or a sliding plate, and a slag amount during converter tapping is 2-4 kg/t. Parameters of various heats are as shown in Table 2.

**Table 2 Endpoint Conditions of Converter**

| Furnace number Target | Endpoint temperature °C 1640-1660 | Endpoint carbon content % 0.03-0.04 | Endpoint free oxygen content % 0.06-0.08 | T.Fe content in slag % 15-18 |
|---|---|---|---|---|
| S1 | 1655 | 0.034 | 0.0655 | 15.6 |
| S2 | 1657 | 0.033 | 0.0666 | 16.7 |
| S3 | 1645 | 0.037 | 0.0623 | 15.8 |
| S4 | 1656 | 0.031 | 0.0766 | 16.9 |
| S5 | 1642 | 0.033 | 0.0745 | 17.2 |
| S6 | 1645 | 0.035 | 0.0711 | 17.3 |
| S7 | 1655 | 0.039 | 0.0623 | 17.4 |
| S8 | 1657 | 0.032 | 0.0778 | 16.9 |
| S9 | 1649 | 0.035 | 0.0713 | 15.8 |
| S10 | 1643 | 0.033 | 0.0656 | 15.9 |

LF refining is as follows: a ladle, after being placed, is moved to a power-on heating position to start power-on heating. During the heating, a bottom blowing flow rate of a ladle is controlled at 300-500 NL/min. When a molten steel temperature reaches a target temperature, the molten steel is measured for temperature and oxygen content, and a free oxygen content in the molten steel is 0.06-0.07%. The bottom blowing flow rate of the ladle is adjusted to 100-200 NL/min. According to the free oxygen content in the molten steel, 400-500 kg of slag modifier and 400-500 kg of lime are added. After stirring for 3-5 min, the molten steel is hoisted to a RH vacuum station. The slag modifier has composition as follows: 48.3% of Al, 23.3% of CaO, 10-15% of Al₂O₃, 10-15% of CaCO₃, and other impurities, where CaCO₃ is a dispersing agent.

RH treatment is as follows: a RH arrival temperature is 1610-1630°C, an arrival free oxygen content is 0.06-0.07%, an arrival carbon content is 0.025-0.035%, and a T. Fe content in ladle slag composition upon RH arrival is 5-8%. After carrying out RH decarbonization for 15-18 min, the free oxygen content in the molten steel is 0.025-0.030%. Aluminum particles, carbon-containing ferromanganese, metallic manganese and a titanium-containing alloy are added in turn according to composition requirements, where an addition amount of the carbon-containing ferromanganese is 2.5 kg/t steel, an addition amount of the metallic manganese is 1.2 kg/t steel, and after the Al particles are added, a circulation is carried out for 3 min before manganese-containing alloy is added, and after the manganese-containing alloy is added, the circulation is carried out for 3 min before the titanium-containing alloy is added. After the alloying, the circulation is carried out for 5-8 min before RH initiates breaking vacuum for tapping. A carbon content in the carbon-containing ferromanganese is 1.1%, and a titanium content in the titanium-containing alloy is 99.8%. The T. Fe content in the ladle slag composition after RH vacuum breaking is less than or equal to 5%. A time between RH vacuum breaking and cast start in continuous casting ranges from 10-15 min. The details are shown in Table 3.

**Table 3 RH Treatment Parameters**

| Furn ace num ber | Arrival free oxygen % | Arrival carbon content % | Arrival temperature °C | Free oxygen in molten steel after decarbonization % | Clean circulation time min | Time from vacuum breaking to cast start min |
|---|---|---|---|---|---|---|
| Targ et | 0.06-0.07 | 0.025-0.035 | 1610-1630 | 0.025-0.030 | 5-8 | 10-15 |
| S1 | 0.065 | 0.027 | 1619 | 0.026 | 7 | 13 |
| S2 | 0.067 | 0.029 | 1619 | 0.029 | 6 | 14 |
| S3 | 0.063 | 0.033 | 1623 | 0.026 | 8 | 12 |
| S4 | 0.065 | 0.031 | 1622 | 0.026 | 7 | 15 |
| S5 | 0.067 | 0.032 | 1627 | 0.027 | 7 | 13 |
| S6 | 0.063 | 0.027 | 1619 | 0.027 | 6 | 14 |
| S7 | 0.069 | 0.026 | 1618 | 0.029 | 7 | 14 |
| S8 | 0.064 | 0.029 | 1624 | 0.028 | 8 | 15 |
| S9 | 0.065 | 0.027 | 1625 | 0.028 | 6 | 13 |
| S10 | 0.062 | 0.026 | 1628 | 0.029 | 7 | 14 |

Continuous casting is as follows: a cross section of a slab is 220 mm*1260 mm. Tundish degree is 25- 35°C. An immersion depth of a submerged nozzle is 160-200 mm, and an opening angle is 20° . An argon gas flow rate of a stopper for continuous casting is 8-12 L/min. A final product has inclusions less than or equal to 15 µm in size, and has a total oxygen content of less than or equal to 15 ppm. The details are shown in Table 4.

**Table 4 Continuous Casting Parameters and Inclusion Level of Finished Product**

| Furnace number | Tundish superhe at°C | Immersion depth of submerged nozzle mm | Argon gas flow rate of stopper L/min | Maximum size of inclusions in finished product µm | Total oxygen ontent in finished product ppm |
|---|---|---|---|---|---|
| Target | 25-35 | 160-200 | 8-12 | ≤15 | ≤15 |
| S1 | 33 | 189 | 9 | 14.8 | 12.5 |
| S2 | 32 | 178 | 11 | 14.5 | 12.9 |
| S3 | 33 | 169 | 12 | 12.8 | 14.5 |
| S4 | 35 | 167 | 10 | 13 | 13.2 |
| S5 | 28 | 177 | 9 | 13.6 | 14.5 |
| S6 | 31 | 195 | 10 | 14 | 12.7 |
| S7 | 29 | 190 | 11 | 12.8 | 12.9 |
| S8 | 32 | 167 | 12 | 13. 1 | 13.9 |
| S9 | 30 | 177 | 10 | 14.7 | 13.8 |
| S10 | 27 | 180 | 10 | 14.2 | 14. 1 |

A qualified continuous casting billet is subjected to hot rolling, acid pickling, cold rolling, continuous annealing, finishing and the like to obtain the strip steel for the battery case.

The surface quality of the steel for battery case produced by the method of the present disclosure meets O5 requirements, and there are no defects such as warping, scars, sand holes, holes, and the like, and the isotropy is well controlled, with △r less than 0.15. Detailed data are shown in Table 5, which can meet the requirements of quick stamping.

**Table 5 Δr(Δr=(r₀+r₉₀-2r₄₅)/2) of Steel Strip for Battery Case**

| Furnace number | T₀ | r₄₅ | r90 | Δr |
|---|---|---|---|---|
| S1 | 2.06 | 2.28 | 2.66 | 0.080 |
| S2 | 1.86 | 2.19 | 2.75 | 0.115 |
| S3 | 1.89 | 2.19 | 2.70 | 0.106 |
| S4 | 1.83 | 2.11 | 2.62 | 0.118 |
| S5 | 1.98 | 2.23 | 2.74 | 0.130 |
| S6 | 1.96 | 2.24 | 2.75 | 0.115 |
| S7 | 1.92 | 2.23 | 2.77 | 0.116 |
| S8 | 1.93 | 2.24 | 2.69 | 0.072 |
| S9 | 1.99 | 2.29 | 2.80 | 0.105 |
| S10 | 1.98 | 2.25 | 2.74 | 0.110 |

A calculation formula of (Δr=(r₀+r₉₀-2r₄₅)/2) adopts a calculation formula disclosed in the Chinese standard *Metallic materials-Sheet and strip-Determination of plastic strain ratio* (GB/T 5027-2016), where r₀ is a plastic strain ratio with an angle of 0°, r₄₅ is a plastic strain ratio with an angle of 45°, and r₉₀ is a plastic strain ratio with an angle of 90 °. The values of r₀, r₉₀ and r₄₅ are measured by a measurement method in the Chinese standard *Metallic materials-Sheet and strip-Determination of plastic strain ratio* (GB/T 5027-2016).

The foregoing embodiments do not limit the present disclosure in any way, and all technical solutions obtained by equivalent substitution or equivalent transformation shall fall within the scope of protection of the present disclosure.

## Claims

1. A method for producing a steel strip for a battery case, comprising steps of hot metal pretreatment, converter smelting, LF (ladle furnace) refining, RH treatment, and continuous casting, wherein
LF refining is as follows: a ladle, after being placed, is moved to a power-on heating position, and power-on heating is started; a bottom blowing flow rate of the ladle is controlled at 300-500 NL/min during heating process; when a molten steel temperature reaches a target temperature of 1618-1635°C, a temperature and an oxygen content are measured, wherein a free oxygen content in molten steel is 0.06-0.07%; and the bottom blowing flow rate of the ladle is adjusted to 100-200 NL/min, and a slag modifier and lime are added according to the free oxygen content in the molten steel;
RH treatment is as follows: an RH arrival temperature is 1610-1630°C, an arrival free oxygen content is 0.06-0.07%, an arrival carbon content is 0.025-0.035%, and a T.Fe content in a RH ladle slag composition upon arrival is 5-8%; after carrying out RH decarburization for 15-18 min, the free oxygen content in the molten steel is 0.025-0.030%, and aluminum particles, carbon-containing ferromanganese, metallic manganese and a titanium-containing alloy are added in turn according to composition requirements, wherein an addition amount of the carbon-containing ferromanganese is 2.3-2.7 kg/t steel, an addition amount of the metallic manganese is 1.1-1.3 kg/t steel, and after the Al particles and manganese-containing alloy are added, the titanium-containing alloy is added after circulating; time between RH vacuum breaking and cast start in continuous casting ranges from 10-15 min; and a carbon content in the carbon-containing ferromanganese is 0.8-1.2%, and a titanium content in the titanium-containing alloy is more than or equal to 99.6%;
continuous casting is as follows: tundish superheat is 25-35°C, an immersion depth of a submerged nozzle is 160-220 mm, an opening angle is 20°, and an argon flow rate of a stopper for continuous casting is 8-12 L/min;
the steel strip for a battery case comprises the following chemical composition in percentage by mass: 0.003-0.006% of carbon, less than or equal to 0.03% of silicon, 0.35-0.45% of manganese, 0.040-0.050% of titanium, 0.040-0.060% of aluminum, less than or equal to 0.020% of phosphorus, less than or equal to 0.012% of sulfur, less than or equal to 0.0040% of nitrogen, and a balance of iron and other inevitable impurities, wherein Ti/(C+N) is more than 5 and less than 7.

2. The method for producing the steel strip for a battery case according to claim 1, wherein the hot metal pretreatment comprises: stirring the hot metal for desulfurization, wherein a sulfur content in the hot metal after desulfurization is less than or equal to 0.0050%.

3. The method for producing the steel strip for a battery case according to claim 1, wherein converter smelting is as follows: at least two bottom blowing holes are clearly visible, an argon gas is blown at the bottom in the whole blowing process, wherein an argon gas flow rate is more than or equal to 300 Nm³/h, an endpoint temperature of converter blowing is 1640-1660°C, an endpoint carbon content of a converter is 0.03-0.04%, an endpoint free oxygen content of the converter is 0.06-0.08%, a T.Fe content in a converter final slag is 15-18%, and a slag amount during converter tapping is 2-4 kg/t.

4. The method for producing the steel strip for a battery case according to claim 1, wherein after continuous casting, the method further comprises hot rolling, acid pickling, cold rolling, continuous annealing, and finishing.

5. The method for producing the steel strip for a battery case according to claim 1, wherein during LF refining, 400-500 kg of slag modifier and 400-500 kg of lime are added.

6. The method for producing the steel strip for a battery case according to claim 5, wherein the slag modifier has composition as follows: 45-50% of Al, 20-25% of CaO, 10-15% of Al₂O₃, 10-15% of CaCO₃, and other inevitable impurities.

7. The method for producing the steel strip for a battery case according to claim 1, wherein during RH refining, the T.Fe content in the ladle slag composition during RH vacuum breaking is less than or equal to 5%.

8. The method for producing the steel strip for a battery case according to claim 1, wherein during RH treatment, after Al particles and manganese-containing alloy are added, a circulation is carried out for 3 min before the titanium-containing alloy is added.

9. The method for producing the steel strip for a battery case according to claim 1, wherein during continuous casting, a final product has inclusions less than or equal to 15 µm in size, and has a total oxygen content of less than or equal to 15 ppm.
